# EUROPEAN PATENT SPECIFICATION

(11) **EP 1 279 711 B1**
(45) Date of publication and mention of the grant of the patent: **05.12.2007**
(21) Application number: 02016107.1
(22) Date of filing: 19.07.2002
(51) Int. Cl.: C09J 133/06, C08F 220/12

(54) **Acrylic pressure-sensitive adhesive and process for producing the same**
Druckempfindlicher Acrylat-Kleber und Verfahren zu seiner Herstellung
Composition acrylique adhésive sensible à la pression et son procédé de préparation

(30) Priority: 27.07.2001 JP 2001227344
(43) Date of publication of application: 29.01.2003
(73) Proprietor: NITTO DENKO CORPORATION, Osaka (JP)
(72) Inventor: Nakano, Shinya, Ibaraki-shi, Osaka (JP); Yamamoto, Takayuki, Ibaraki-shi, Osaka (JP); Taruno, Tomohiro, Ibaraki-shi, Osaka (JP)
(74) Representative: Grünecker, Kinkeldey, Stockmair & Schwanhäusser Anwaltssozietät

(56) References cited:
- FR-A- 2 664 280
- US-A1- 2001 053 814

## Description

The present invention relates to an acrylic pressure-sensitive adhesive useful as, e.g., an adhesive for adhesive tapes or sheets. The invention further relates to a process for producing the pressure-sensitive adhesive.

Acrylic pressure-sensitive adhesives are excellent in pressure-sensitive adhesive properties such as tackiness and cohesive force and in weatherability, oil resistance. The adhesives are hence extensively used as pressure-sensitive adhesives (tacky adhesives) for forming the pressure-sensitive adhesive layers of pressure-sensitive adhesive tapes, labels or sheets.

Acrylic pressure-sensitive adhesives heretofore in use comprise a copolymer obtained by copolymerizing one or more alkyl (meth)acrylates, as the main component, which are capable of forming a tacky polymer having a relatively low glass transition point, such as n-butyl acrylate or 2-ethylhexyl acrylate, with a monomer having a functional group, such as acrylic acid, 2-hydroxyethyl (meth)acrylate, or acrylamide, as an component serving to form crosslinkable sites in the tacky polymer or to enhance intermolecular force or improve cohesive force and with a monomer such as styrene or vinyl acetate as a monomer component capable of forming a hard polymer having a relatively high glass transition point. Such polymers for use as acrylic pressure-sensitive adhesives are generally produced by the solution polymerization method, suspension polymerization method or emulsion polymerization method.

However, the solution polymerization method not only necessarily has a problem concerning environmental sanitation because of the use of a large amount of an organic solvent, but also is costly because polymer isolation necessitates energy and a step for distilling off the organic solvent. The suspension polymerization and emulsion polymerization methods have a drawback that the emulsifying agent or dispersant used in polymerization comes into the polymer and, hence, a pure polymer is difficult to obtain. In addition, the suspension polymerization and emulsion polymerization methods are costly like the solution polymerization method because water should be evaporated for polymer isolation.

Furthermore, since polymerization for producing an acrylic pressure-sensitive adhesive by each of those methods is usually conducted batchwise, the polymerization system has poor evenness in polymerization conditions such as temperature and monomer concentration. Because of this, increasing the conversion into polymer results in a widened molecular-weight distribution, and the reduced monomer concentration in the final stage of the reaction results in formation of a large amount of low molecular products. As a result, the polymer obtained has impaired pressure-sensitive adhesive properties. Use of this polymer as a pressure-sensitive adhesive poses a problem that the amount of components transferred to an adherend is large.

On the other hand, a continuous bulk polymerization method which comprises using a single- or twin-screw extruder as a reactor to continuously polymerize monomers to obtain a polymer has been proposed (see, for example, Japanese Patent Publication No. 62-41532) in order to eliminate the problems described above. Since this method uses neither an organic solvent nor water nor other components such as an emulsifying agent and dispersant, it can not only attain a reduction in energy cost, but also yield a polymer containing no impurities. Use of a continuous process is advantageous in that since monomers are continuously fed, the polymerization system can be easily regulated so as to have even reaction conditions and the formation of low-molecular components can be inhibited, and that since the polymerization system can be made to have a narrow temperature distribution, a polymer having a narrow molecular weight distribution can ideally be obtained. Virtually, however, the related-art continuous bulk polymerization method has a problem that there are cases where the reaction proceeds rapidly depending on the kind of the monomers and the resultant increase in viscosity makes temperature control difficult, leading to a runaway reaction. Namely, the design of polymer molecular weight is difficult. Furthermore, use of a screw extruder as a reactor poses a problem that it is difficult to completely eliminate the residence zone (dead space) and, hence, by-products such as gels and deterioration products generate and a homogeneous polymer is not obtained.

The object of the present invention is to provide an acrylic pressure-sensitive adhesive which comprises a polymer reduced in the content of low molecular weight components and having a narrow molecular weight distribution and a high weight average molecular weight and which has excellent pressure-sensitive adhesive properties and is less apt to foul adherends and to provide a process for producing the acrylic pressure-sensitive adhesive.

The object is achieved by a process for producing an acrylic pressure-sensitive adhesive which comprises continuously feeding a monomer component comprising at least one alkyl (meth)acrylate and carbon dioxide as a diluent to a reactor and radical-polymerizing the monomer component under the conditions of a temperature of from 50 to 100°C and a residence time of from longer than 60 minutes to 200 minutes to thereby continuously obtain an acrylic pressure-sensitive adhesive comprising an acrylic polymer.

In another embodiment, the present invention is directed to an acrylic pressure-sensitive adhesive obtainable by continuously feeding a monomer component comprising at least one alkyl (meth)acrylate and carbon dioxide as a diluent to a reactor and radical-polymerizing the monomer component under the conditions of a temperature of from 50 to 100°C and a residence time of from longer than 60 minutes to 200 minutes, said adhesive comprising an acrylic polymer which has a weight average molecular weight of 1,200,000 or higher and in which the proportion of components having a molecular weight of 100,000 or lower is 10% by weight or lower based on the weight of the whole polymer.

As a result of intensive investigations to overcome the problems described above, it has been found that when one or more monomers comprising an alkyl (meth)acrylate are continuously fed to a reactor together with carbon dioxide as a diluent to radical-polymerize the monomers under specific conditions, then a polymer reduced in the content of low molecular weight components and having a narrow molecular weight distribution and a high weight average molecular weight is formed and an adhesive composition which has excellent pressure-sensitive adhesive properties and is less apt to foul adherends is obtained. The invention has been completed based on this finding.

### BRIEF DESCRIPTION OF THE DRAWING

The Figure is a schematic flow chart showing the continuous reactor used in the Examples; in which
1: reserve tank
2, 6: high-pressure pump
3, 7: needle valve
4: junction block with in-line mixer
5: carbon dioxide bomb
8: jacketed tubular reactor
9: pressure-holding valve

### DETAILED DESCRIPTION OF THE INVENTION

Examples of the alkyl (meth)acrylate to be used as or in the monomer component in the present invention include alkyl acrylates and methacrylates in which the alkyl group has 1 to 18 carbon atoms. Specific examples thereof include methyl acrylate, ethyl acrylate, propyl acrylate, isopropyl acrylate, butyl acrylate, isobutyl acrylate, 2-ethylhexyl acrylate, octyl acrylate, nonyl acrylate, isononyl acrylate, decyl acrylate, dodecyl acrylate, butyl methacrylate, 2-ethylhexyl methacrylate and octyl methacrylate. Those alkyl (meth)acrylates can be used alone or as a mixture of two or more thereof.

Although one or more of those alkyl (meth)acrylates may be used as the only monomer(s), those may be used as the main component in combination with monomers copolymerizable therewith. Typical examples of the copolymerizable monomers include carboxyl-containing ethylenically unsaturated monomers such as (meth)acrylic acid, crotonic acid, itaconic acid, maleic acid and fumaric acid. Of those carboxyl-containing ethylenically unsaturated monomers, acrylic acid is particularly preferable. Those carboxyl-containing ethylenically unsaturated monomers are important components for forming crosslinkages in the polymer. Other examples of the copolymerizable monomers include various monomers known as modifying monomers for acrylic pressure-sensitive adhesives, such as vinyl esters, e.g., vinyl acetate, styrenic monomers such as styrene, cyano-containing monomers such as acrylonitrile, amide-containing monomers such as (meth)acrylamide or acryloylmorpholine, hydroxyl-containing monomers, and epoxy-containing monomers. Any of those monomers can be used. From the standpoint of adhesive properties, the amount of those copolymerizable monomers to be used is preferably up to 50% by weight based on the weight of all monomers including the alkyl (meth)acrylates.

The polymerization reaction can be conducted with the aid of a polymerization initiator which upon decomposition generates a free radical. Initiators for general use in radical polymerization can be used. Examples of the initiator include organic peroxides such as dibenzoyl peroxide, di-tert-butyl peroxide, cumene hydroperoxide or lauroyl peroxide, and azo compounds such as 2,2'-azobisisobutyronitrile or azobisisovaleronitrile.

The amount of the initiator used may be the same as in the ordinary polymerization of acrylic monomers. For example, the amount of the generator used is generally 0.01 to 1 part by weight, preferably 0.05 to 0.5 part by weight, per 100 parts by weight of all monomers.

The amount of the carbon dioxide to be used as a diluent in the present invention is, for example, from 5 to 2,000 parts by weight, preferably from 20 to 900 parts by weight, per 100 parts by weight of all monomers. Although a diluent consisting of carbon dioxide only is usually sufficient, a small amount of an organic solvent may be contained therein according to need for the purpose of improving miscibility.

The reactor that can be used in the present invention is not particularly limited so long as the contents present therein can be mixed, controlled with respect to reaction temperature, and continuously transferred. Preferred reactors are ones having the excellent ability to mix the contents and perform heat exchange. Use of such a reactor has the following advantages: a large amount of heat generated by the polymerization of acrylic monomers can be easily removed; because the system can be easily made to have evenness in reaction conditions, the residence time distribution, polymerization temperature distribution, and the like can be narrowed and a polymer having a narrow molecular weight distribution can hence be obtained; and the acrylic monomers remaining unreacted after the polymerization can be removed under reduced pressure by a continuous operation in the same apparatus.

An especially advantageous example of the process of the present invention comprises polymerizing the monomers in a continuous flow in a tubular reactor. The length of the tubular reactor can be suitably selected according to, for example, polymerization temperature, polymerization pressure, monomer concentration in carbon dioxide and radical initiator concentration. Besides tubular reactors, usable examples of continuous reactors include single- or twin-screw continuous kneaders and single- or twin-screw extruders. Two or more of these may be used in combination.

In the process of the present invention, the monomer component comprising at least one alkyl (meth)acrylate and carbon dioxide are continuously fed to the reactor, and the monomer component is radical-polymerized under the conditions of a temperature of from 50 to 100°C and a residence time of from longer than 60 minutes to 200 minutes. Although a free-radical initiator may be supplied separately from the monomers, the general technique is to mix the initiator beforehand with the monomers and feed this mixture to the reactor. It is preferred that an in-line mixer for mixing the monomer component with carbon dioxide be disposed at the inlet to the reactor so as to feed a mixture of these to the reactor.

The reaction temperature is preferably from 55 to 90°C, and the residence time is preferably from longer than 60 minutes to 180 minutes, more preferably from 70 to 120 minutes. In case where the reaction temperature is lower than 50°C, the rate of reaction is too low and a residence time exceeding 200 minutes is necessary. Such a long residence time is impractical. In case where the reaction temperature exceeds 100°C, the reaction proceeds rapidly to cause thermal crosslinking. On the other hand, residence times of 60 minutes and shorter do not result in a sufficient conversion, while residence times exceeding 200 minutes are undesirable in that thermal crosslinking occurs.

The polymerization can be conducted in carbon dioxide regulated so as to have a pressure of, for example, from 5.73 to 50 MPa (e.g., in supercritical carbon dioxide). The polymerization pressure and temperature may be regulated in several steps according to need.

For obtaining a resin composition having a narrower molecular weight distribution, it is effective to narrow the residence time distribution. In the case of using a tubular reactor such as a straight tube reactor, the residence time distribution can be regulated by regulating the diameter of the tube, ratio of the tube length to the inner diameter (L/D), etc. In the case where a single- or twin-screw continuous kneader or a single- or twin-screw extruder is used as a reactor, the residence time distribution can be regulated by suitably selecting a paddle or screw arrangement, distance between the barrel and the paddles and/or screw(s), etc.

In the process of the present invention, carbon dioxide is used as a diluent, and one or more monomers and the carbon dioxide are continuously fed to a reactor to continuously polymerize the monomers under specific conditions. Because of this constitution, polymerization conditions including polymerization temperature and concentration can be more easily made even than in the batch polymerization processes heretofore used. Furthermore, due to the diluting effect of the carbon dioxide, the system is kept in a low viscosity state throughout, making the control of the reaction easy. As a result, not only the viscosity increase accompanying rapid proceeding of reaction and the runaway of reaction can be prevented, but also the dead spaces in the reactor, e.g., a reaction tube or screw extruder, can be eliminated to thereby inhibit the formation of by-products such as gels and deterioration products. In addition, the process of the present invention necessitates neither an emulsifying agent nor a dispersant unlike the suspension polymerization method and emulsion polymerization method. Because of those, the process of the present invention can provide a homogeneous acrylic polymer reduced in impurity content and in the content of low molecular weight components and having a narrow molecular weight distribution. The acrylic pressure-sensitive adhesive, which comprises such a polymer, is excellent in pressure-sensitive adhesive properties such as cohesive force and adhesive force and is extremely less apt to foul adherends.

Moreover, in the process of the present invention, there is no need of using an organic solvent or water. Consequently, the process is advantageous from the standpoint of environmental sanitation, has high productivity, and attains a cost reduction.

By the process of the present invention described above, an acrylic pressure-sensitive adhesive comprising an acrylic polymer which, for example, has a weight average molecular weight of 1,200,000 or higher (e.g., from 1,200,000 to 5,000,000), preferably from 1,500,000 to 3,000,000, and in which the proportion of components having a molecular weight of 100,000 or lower is 10% by weight or lower, preferably 5% by weight or lower, based on the weight of the whole polymer can be prepared. This acrylic polymer preferably has a molecular weight distribution (ratio of the weight average molecular weight to the number average molecular weight (M_{w}/Mₙ)) of from about 2.0 to 6.0. The weight average molecular weight, proportion of components having a molecular weight of 100,000 or lower, and molecular weight distribution in the acrylic polymer can be regulated, for example, by suitably selecting the kinds and proportions of monomers, kind and amount of a polymerization initiator, polymerization conditions (e.g., reaction temperature, reaction pressure, and residence time), kind and shape of a reactor, and shape and structure of a stirring unit. The weight average molecular weight, proportion of components having a molecular weight of 100,000 or lower, and molecular weight distribution can be determined through gel permeation chromatography (GPC).

Although the pressure-sensitive adhesive prepared by the process described above may be used as it is, various additives may be added thereto before use according to need. For example, a known or common tackifier resin (e.g., a rosin resin, terpene resin, petroleum resin, coumarone resin, indene resin or styrene resin) may be incorporated in order to regulate the adhesive properties of an adhesive composition containing the acrylic polymer as the main adhesive component. Besides such tackifier resins, various known additives may be incorporated, such as plasticizers, fillers, e.g., calcium carbonate and finely powdery silica, colorants, and ultraviolet absorbers. The amount of each of such additives to be added may be the same as in ordinary acrylic pressure-sensitive adhesives.

A crosslinking agent can be incorporated into the pressure-sensitive adhesive of the present invention. By crosslinking the acrylic polymer with the crosslinking agent, the adhesive can be made to have further enhanced cohesive force.

The crosslinking agent to be used can be selected from a wide range of known crosslinking compounds. Especially preferred examples thereof include polyfunctional melamine compounds such as a methylated trimethylolmelamine, and polyfunctional epoxy compounds such as diglycidylaniline or glycerol diglycidyl ether. The amount of the crosslinking agent to be used is, for example, from 0.001 to 10 parts by weight, preferably from 0.01 to 5 parts by weight, per 100 parts by weight of the acrylic polymer.

It is also preferred to use a polyfunctional isocyanate compound. Examples thereof include tolylene diisocyanate, hexamethylene diisocyanate, polymethylenepolyphenyl isocyanate, diphenylmethane diisocyanate, diphenylmethane diisocyanate dimer, products of the reaction of trimethylolpropane with tolylene diisocyanate, products of the reaction of trimethylolpropane with hexamethylene diisocyanate, polyether polyisocyanates, and polyester polyisocyanates. The amount of such an isocyanate compound to be used is, for example, from 0.01 to 20 parts by weight, preferably from 0.05 to 15 parts by weight, per 100 parts by weight of the acrylic polymer.

The pressure-sensitive adhesive of the invention may be formed into a thin film. This can be accomplished, for example, by discharging the adhesive which contains carbon dioxide and is in a highly pressurized state into an atmosphere having atmospheric pressure through the orifice of a die. Alternatively, a method may be used which comprises depressurizing the polymer to the atmospheric pressure, subsequently redissolving the polymer in an organic solvent such as toluene, and forming the solution into a thin film by a technique heretofore in use, e.g., roll coating. Furthermore, the pressure-sensitive adhesive may be applied in any of various formed such as, e.g., an adhesive tape produced by applying the adhesive on one or each side of any of various substrates such as paper, nonwoven fabrics, plastic sheets, and foamed sheets to form an adhesive layer having a given thickness or a substrate-less adhesive tape produced by applying the adhesive on a release paper to form an adhesive layer having a given thickness.

Before the pressure-sensitive adhesive layer formed on an adherend, substrate, or release paper is applied, the acrylic polymer constituting the adhesive layer may be suitably crosslinked. This crosslinking can be accomplished, for example, by a drying step after coating or by the step of light irradiation or electron beam irradiation after the drying step.

Since carbon dioxide is used as a diluent in the present invention as described above, the diluent volatilizes upon pressure release after the polymerization. Consequently, the step of drying with an oven or the like can be simplified. The use of this diluent is preferred also from the standpoints of energy saving.

According to the present invention, since carbon dioxide is used as a diluent and a monomer component comprising an alkyl (meth)acrylate is continuously polymerized under specific conditions, an acrylic pressure-sensitive adhesive can be obtained which comprises a homogeneous polymer reduced in the content of low molecular weight components and having a narrow molecular weight distribution and which has excellent pressure-sensitive adhesive properties and is less apt to foul adherends.

The present invention will be explained in more detail by reference to the following Examples. Hereinafter, unless otherwise indicated, all "parts" and "percents" are by weight. The average molecular weight and molecular weight distribution of each polymer obtained were determined by the following methods.

### Average Molecular Weight

The average molecular weight was measured by gel permeation chromatography and calculated for standard polystyrene.

### Molecular Weight Distribution

The molecular weight was measured by gel permeation chromatography, and the distribution is expressed in terms of the ratio of the weight average molecular weight to the number average molecular weight (M_{w}/Mₙ).

### EXAMPLE 1

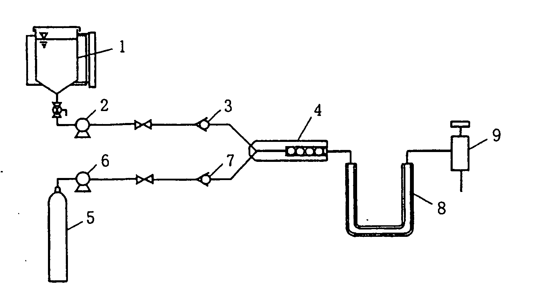

Continuous polymerization reactor shown in Fig. 1 was used to produce an acrylic pressure-sensitive adhesive.

A monomer/initiator mixture prepared beforehand by mixing 80 parts of 2-ethylhexyl acrylate, 20 parts of acryloylmorpholine and 0.1 part of azobisisobutyronitrile (initiator) was introduced into a reserve tank 1. The monomer/initiator mixture was pressurized to 15 MPa with a high-pressure pump 2 and continuously fed to a junction block 4 equipped with an in-line mixer, while regulating the flow rate of the mixture with a needle valve 3. On the other hand, carbon dioxide supplied from a carbon dioxide bomb 5 was compressed to 15 MPa with a high-pressure pump 6 and continuously fed to the junction block 4 equipped with an in-line mixer, while regulating the flow rate of the carbon dioxide with a needle valve 7. The monomer/initiator mixture and carbon dioxide fed were uniformly mixed in the junction block 4 equipped with an in-line mixer and then fed to a tubular reactor 8 (length: 2,000 mm; inner diameter: 10 mm) in which temperature control was possible by heating or cooling with a jacket. The temperature in the reactor 8 was kept constant at 70°C. The monomer/initiator mixture and carbon dioxide fed flowed continuously through the reactor 8 over a residence time of 70 minutes, during which polymerization proceeded to produce an acrylic polymer. The polymer produced was continuously discharged together with the carbon dioxide through a pressure-holding valve 9 into a vessel. The carbon dioxide was discharged through a gas meter to measure its volume. The rate of discharge of carbon dioxide was determined from that volume. The rate of discharge of the polymer was 1.0 g/min, and the rate of discharge of carbon dioxide was 0.9 g/min.

As a result, an acrylic polymer having a weight average molecular weight of 1,790,000 and an M_{w}/Mₙ of 5.4 was obtained. The conversion of the monomers was 90.1%. In this polymer, the proportion of components having a molecular weight of 100,000 or lower, as determined from a molecular weight distribution curve, was 6.43%.

### EXAMPLE 2

The same procedure as in Example 1 was conducted, except that 80 parts of 2-ethylhexyl acrylate, 20 parts of acryloylmorpholine and 3 parts of acrylic acid were fed as a monomer component together with 0.1 part of azobisisobutyronitrile, the pressure was changed to 20 MPa, and the temperature and residence time in the reactor 8 were changed to 60°C and 100 minutes, respectively. The rate of discharge of the polymer produced was 1.0 g/min, and the rate of discharge of carbon dioxide was 1.0 g/min.

As a result, an acrylic polymer having a weight average molecular weight of 2,460,000 and an M_{w}/Mₙ of 4.2 was obtained. The conversion of the monomers was 83.5%. In this polymer, the proportion of components having a molecular weight of 100,000 or lower, as determined from a molecular weight distribution curve, was 2.24%.

### EXAMPLE 3

The same procedure as in Example 1 was conducted, except that the pressure was changed to 25MPa, and the temperature and residence time in the reactor 8 were changed to 60°C and 120 minutes, respectively. The rate of discharge of the polymer produced was 0.8 g/min, and the rate of discharge of carbon dioxide was 1.0 g/min.

As a result, an acrylic polymer having a weight average molecular weight of 2,010,000 and an M_{w}/Mₙ of 5.64 was obtained. The conversion of the monomers was 90.4%. In this polymer, the proportion of components having a molecular weight of 100,000 or lower, as determined from a molecular weight distribution curve, was 5.55%.

### COMPARATIVE EXAMPLE

The same procedure as in Example 1 was conducted, except that 80 parts of butyl acrylate and 20 parts of acryloylmorpholine were used as a monomer component, the pressure was changed to 20 MPa and carbon dioxide was not fed to the reactor 8, and the temperature and residence time in the reactor 8 were changed to 70°C and 90 minutes, respectively. As a result, the reaction came to run away during the residence time to cause gelation, and the polymer produced could not be discharged from the reactor.

## Claims

1. A process for producing an acrylic pressure-sensitive adhesive which comprises continuously feeding a monomer component comprising at least one alkyl (meth)acrylate and carbon dioxide as a diluent to a reactor and radical-polymerizing the monomer component under the conditions of a temperature of from 50 to 100°C and a residence time of from longer than 60 minutes to 200 minutes to thereby continuously obtain an acrylic pressure-sensitive adhesive comprising an acrylic polymer.

2. The process as claimed in claim 1, wherein the reaction temperature is from about 55 to 90°C.

3. The process as claimed in claim 1, wherein the residence time is from longer than 60 minutes to 180 minutes.

4. The process as claimed in claim 1, wherein said alkyl (mem)acrylate has 1 to 18 carbon atoms in the alkyl moiety.

5. The process as claimed in claim 1, wherein said monomer component comprises at least one alkyl (meth)acrylate and a monomer copolymerizable therewith.

6. An acrylic pressure-sensitive adhesive obtainable by continuously feeding a monomer component comprising at least one alkyl (meth)acrylate and carbon dioxide as a diluent to a reactor and radical-polymerizing the monomer component under the conditions of a temperature of from 50 to 100°C and a residence time of from longer than 60 minutes to 200 minutes, said adhesive comprising an acrylic polymer which has a weight average molecular weight of 1,200,000 or higher and in which the proportion of components having a molecular weight of 100,000 or lower is 10% by weight or lower based on the weight of the whole polymer.

7. The acrylic pressure-sensitive adhesive as claimed in claim 6, wherein said acrylic polymer has a weight average molecular weight of from 1,500,000 to 3,000,000.

8. The acrylic pressure-sensitive adhesive as claimed in claim 6, wherein said proportion of components having a molecular weight of 100,000 or lower is 5% by weight or lower.

9. The acrylic pressure-sensitive adhesive as claimed in claim 6, wherein said acrylic polymer has a molecular weight distribution (ratio of the weight average molecular weight to the number average molecular weight (M_{w}/Mₙ)) of from about 2.0 to 6.0.

## Patentansprüche

1. Verfahren zum Herstellen eines druckempfindlichen Acrylklebstoffs, das die kontinuierliche Zufuhr einer Monomerkomponente, die wenigstens ein Alkyl(meth)acrylat und Kohlendioxid als Verdünnungsmittel umfasst, zu einem Reaktor und Radikalpolymerisieren der Monomerkomponente unter den Bedingungen einer Temperatur von 50 bis 100°C und einer Verweilzeit von länger als 60 Minuten bis 200 Minuten umfasst, um dadurch kontinuierlich einen druckempfindlichen Acrylklebstoff, der ein Acrylpolymer enthält, zu erhalten.

2. Verfahren wie in Anspruch 1 beansprucht, worin die Reaktionstemperatur etwa 55 bis 90°C beträgt.

3. Verfahren wie in Anspruch 1 beansprucht, worin die Verweilzeit länger als 60 Minuten bis 180 Minuten beträgt.

4. Verfahren wie in Anspruch 1 beansprucht, worin das Alkyl(meth)acrylat 1 bis 18 Kohlenstoffatome in der Alkylkomponente enthält.

5. Verfahren wie in Anspruch 1 beansprucht, worin die Monomerkomponente wenigstens ein Alkyl(meth)acrylat und ein damit polymerisierbares Monomer enthält.

6. Druckempfindlicher Acrylklebstoff, erhältlich durch kontinuierliches Zuführen einer Monomerkomponente, die wenigstens ein Alkyl(meth)acrylat und Kohlendioxid als Verdünnungsmittel enthält, zu einem Reaktor und Radikalpolymerisieren der Monomerkomponente unter den Bedingungen einer Temperatur von 50 bis 100°C und einer Verweilzeit von länger als 60 Minuten bis 200 Minuten, wobei der Klebstoff ein Acrylpolymer umfasst, das ein Molekulargewicht-Gewichtsmittel von 1200000 oder höher hat und in welchem der Anteil von Komponenten mit einem Molekulargewicht von 100000 oder weniger 10 Gew.-% oder weniger, bezogen auf das Gewicht des gesamten Polymers, beträgt.

7. Druckempfindlicher Acrylklebstoff wie in Anspruch 6 beansprucht, worin das Acrylpolymer ein Molekulargewicht-Gewichtsmittel von 1500000 bis 3000000 hat.

8. Druckempfindlicher Acrylklebstoff wie in Anspruch 6 beansprucht, worin der Anteil von Komponenten mit einem Molekulargewicht von 100000 oder weniger 5 Gew.-% oder weniger beträgt.

9. Druckempfindlicher Acrylklebstoff wie in Anspruch 6 beansprucht, wobei das Acrylpolymer eine Molekulargewichtsverteilung (Verhältnis des Molekulargewicht-Gewichtsmittels zu dem Molekulargewicht-Zahlenmittel (M_{w}/Mₙ)) etwa 2,0 bis 6,0 beträgt.

## Revendications

1. Procédé pour la production d'un adhésif acrylique sensible à la pression qui comprend l'introduction en continu d'un constituant monomère comprenant au moins un (méth)acrylate d'alkyle et du dioxyde de carbone comme diluant dans un réacteur et la polymérisation radicalaire du constituant monomère dans les conditions d'une température de 50 à 100°C et d'un temps de séjour de plus de 60 min à 200 min pour obtenir par-là en continu un adhésif acrylique sensible à la pression comprenant un polymère acrylique.

2. Procédé selon la revendication 1, dans lequel la température de réaction est d'environ 55 à 90°C.

3. Procédé selon la revendication 1, dans lequel le temps de séjour est de plus de 60 min à 180 min.

4. Procédé selon la revendication 1, dans lequel ledit (méth)acrylate d'alkyle présente de 1 à 18 atomes de carbone dans la moitié alkyle.

5. Procédé selon la revendication 1, dans lequel ledit constituant monomère comprend au moins un (méth)acrylate d'alkyle et un monomère copolymérisable avec celui-ci.

6. Adhésif acrylique sensible à la pression pouvant être obtenu par l'introduction continue d'un constituant monomère comprenant au moins un (méth)acrylate d'alkyle et du dioxyde de carbone comme diluant dans un réacteur et par la polymérisation radicalaire du constituant monomère dans les conditions d'une température de 50 à 100°C et d'un temps de séjour de plus de 60 min à 200 min, ledit adhésif comprenant un polymère acrylique qui présente un poids moléculaire moyen en poids de 1 200 000 ou supérieur et dans lequel la proportion des constituants présentant un poids moléculaire de 100 000 ou inférieur est de 10 % en poids ou inférieur rapporté au poids du polymère global.

7. Adhésif acrylique sensible à la pression selon la revendication 6, dans lequel ledit polymère acrylique présente un poids moléculaire moyen en poids de 1 500 000 à 3 000 000.

8. Adhésif acrylique sensible à la pression selon la revendication 6, dans lequel ladite proportion des constituants présentant un poids moléculaire de 100 000 ou inférieur est de 5 % en poids ou inférieure.

9. Adhésif acrylique sensible à la pression selon la revendication 6, dans lequel ledit polymère acrylique présente une distribution du poids moléculaire (rapport du poids moléculaire moyen en poids au poids moléculaire moyen en nombre (M_{w/}Mₙ)) d'environ 2,0 à 6,0.
